# EUROPEAN PATENT APPLICATION

(11) **EP 4 187 851 A1**
(43) Date of publication of application: **31.05.2023**
(21) Application number: 22204998.3
(22) Date of filing: 02.11.2022
(51) Int. Cl.: H04L 9/40, G06F 3/12

(54) **COMMUNICATION SYSTEM, COMMUNICATION METHOD, AND CARRIER MEANS**

(30) Priority: 30.11.2021 JP 2021194847
(71) Applicant: Ricoh Company, Ltd., Tokyo 143-8555 (JP)
(72) Inventor: Ota, Hiroshi, Tokyo, 143-8555 (JP)
(74) Representative: Marks & Clerk LLP

(57) **Abstract**

A communication system, a communication method, and a carrier means. The communication system (1) receives setting of access control rule corresponding to a combination of an external system (111,120) connected to an external network (2, 110) and a service provided by an information processing apparatus (101, 102) residing on a local network (100), receives from the external system(111,120), a service use request for using the service, connects to a relay server (13) on the external network (2,110) from within the local network for relaying communication between the relay server (13) and the service based on the service use request and the access control rule, and instructs the external system (111,120) to connect to the relay server (13).

## Description

### BACKGROUND

### Technical Field

The present disclosure relates to a communication system, a communication method, and a carrier means.

### Background Art

In recent years there is a growing demand for, for example, a communication system that remotely accesses an information processing apparatus connected to a local network in a company or the like from a communication terminal that is connected to the internet, due to work style reform and spread of telecommuting.

A known remote control system that connects from the access source terminal to a remote control adapter using the mobile phone line displays status of a device to be operated and transmits control information to the device (See Japanese Unexamined Patent Application Publication No.2013-217986, for example).

There is a demand to use a service provided by an information processing apparatus within a local network from the access source terminal operated by the user, as well as from an external system such as an application on the cloud.

However, services provided by the information processing apparatus within the local network is not possible to be used from an external system connected to the external network with a conventional technology.

### SUMMARY

Embodiments of the present disclosure describe a communication system, a communication method, and a carrier means. The communication system receives setting of access control rule corresponding to a combination of an external system connected to an external network and a service provided by an information processing apparatus residing on a local network, receives from the external system, a service use request for using the service, connects to a relay server on the external network from within the local network for relaying communication between the relay server and the service based on the service use request and the access control rule, and instructs the external system to connect to the relay server.

According to embodiments of the present disclosure, the service provided by the information processing apparatus within the local network is available from the external system connected to the external network.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a block diagram illustrating an example of a system configuration of a communication system according to embodiments of the present disclosure;
FIG. 2 is a block diagram illustrating an example of a hardware configuration of a computer according to embodiments of the present disclosure;
FIG. 3 is a block diagram illustrating an example of a hardware configuration of an image forming apparatus according to embodiments of the present disclosure;
FIGs. 4A and 4B are diagrams illustrating examples of functional configurations of a management server and an authentication server according to a first embodiment of the present disclosure;
FIG. 5 is a diagram illustrating an example of an access control rule setting screen according to the first embodiment of the present disclosure;
FIG. 6 is a diagram illustrating an example of an authentication setting screen according to the first embodiment of the present disclosure;
FIG. 7 is a diagram illustrating an example of a functional configuration of the communication device according to the first embodiment of the present disclosure;
FIGs. 8A and 8B are diagrams illustrating examples of functional configurations of an external system and a relay server according to the first embodiment of the present disclosure;
FIG. 9 is a diagram illustrating an example of an external system setting screen according to the first embodiment of the present disclosure;
FIG. 10 is a diagram illustrating an example of a remote facsimile service setting screen according to the first embodiment of the present disclosure;
FIG. 11 is a first sequence diagram illustrating an example of a process executed by the communication system according to the first embodiment of the present disclosure;
FIG. 12 is a second sequence diagram illustrating the example of the process executed by the communication system according to the first embodiment of the present disclosure;
FIG. 13 is a diagram illustrating an example of an operation screen according to the first embodiment of the present disclosure;
FIG. 14 is a diagram illustrating an operation by an e-mail according to the first embodiment of the present disclosure;
FIGs. 15A and 15B are diagrams illustrating examples of functional configurations of a relay server according to a second embodiment of the present disclosure;
FIG. 16 is a sequence diagram illustrating an example of a process executed by the communication system according to the second embodiment of the present disclosure;
FIG. 17 is a first sequence diagram illustrating an example of an authentication process according to embodiments of the present disclosure;
FIG. 18 is a second sequence diagram illustrating the example of the authentication process according to embodiments of the present disclosure; and
FIG. 19 is a diagram illustrating an example of a confirmation screen according to embodiments of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a description is given of several embodiments of the present disclosure with reference to drawings.

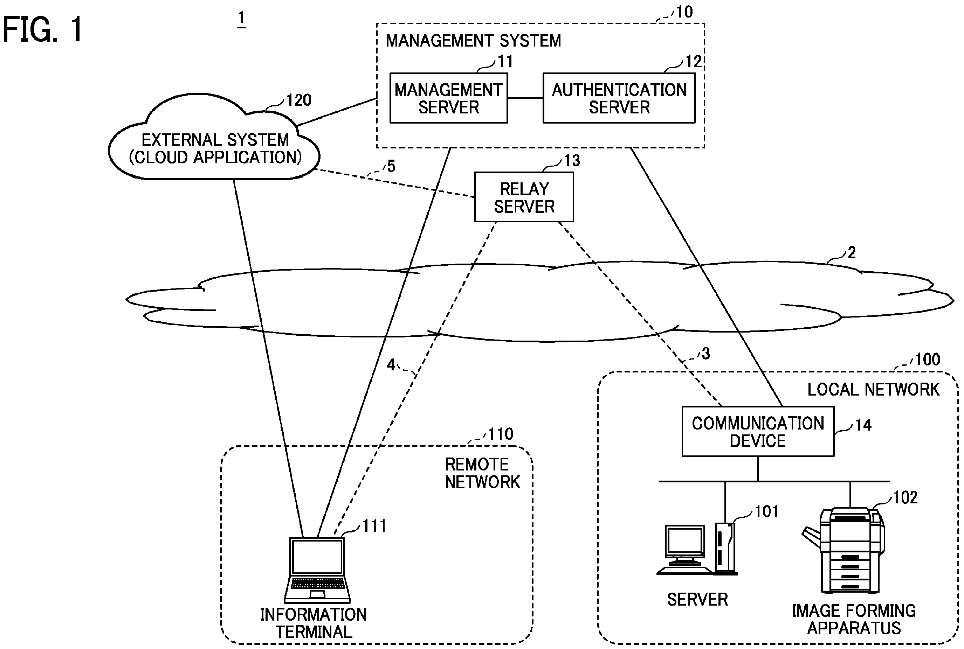

FIG. 1 is a block diagram illustrating an example of a system configuration of a communication system according an embodiment of the present disclosure. The communication system 1 includes, for example, a management server 11 connected to a communication network 2 such as the internet, an authentication server 12, a relay server 13, a communication device 14 connected to a local network 100, and the like. The communication system 1 also includes an external system (cloud application) 120 connected to an external network, which is a network outside the local network 100, an information terminal 111, and the like.

In the example of FIG. 1, the external system 120 is connected to the communication network 2, which is an example of the external network. The communication network 2 includes, for example, a wide area network (WAN) such as the internet and a mobile communication network, a local area network (LAN) other than the local network 100, and the like. The communication network 2 includes a wired communication as well as networks by wireless communication such as 3rd generation (3G), 4th generation (4G), 5th generation (5G), Wireless Fidelity (Wi-Fi, registered trademark), Worldwide Interoperability for Microwave Access (WiMAX), and Long Term Evolution (LTE).

Also, in the example of FIG. 1, the information terminal 111 is connected to a remote network 110, which is another example of the external network. The remote network 110 is, for example, the LAN, a private network, or the like, which is provided at a home or a remote office and which is connected to the communication network 2 such as the internet. The network to which the information terminal 111 is connected is not limited to the remote network 110. For example, the information terminal 111 may be connected to the communication network 2 such as the internet using the WAN or a public wireless LAN from outside. Here, as an example, the information terminal 111 is connected to the remote network 110 provided in the remote office or the like, and the communication network 2 is the internet.

The communication system 1 is a system for using services provided by an information processing apparatus such as a server 101 or an image forming apparatus 102 connected to the local network 100 from an external system 120 or the like connected to the external network.

The external system 120 is, for example, a system implemented by one or more computers or one or more virtual machines on the cloud and executing programs such as cloud applications. Here, the virtual machine is a computer that implements the same function as a physical computer by software. The cloud applications are programs that provide functions or services through the cloud (cloud computing). Here, as a specific example, following description is given assuming that the cloud application is a business improvement platform such as KINTONE (registered trademark).

The information terminal 111 is a computer including a web browser function, such as a personal computer (PC), a tablet terminal, or a smart phone, used by a user.

The information terminal 111 accesses the management server 11, the authentication server 12, the relay server 13 and the like through the remote network 110 and the communication network 2. The information terminal 111 is another example of the external system connected to the external network.

The management server 11 is implemented by, for example, one or more computers connected to the communication network 2. The management server 11, for example, uses the communication system 1 to send to the external system 120, the information terminal 111, or the like, a web page or the like for accessing (connecting to) the web service provided by the information processing apparatus in the local network 100. The management server 11 also includes a function of managing communication for the external system 120 or the information terminal 111 or the like to use services provided by the information processing apparatus in the local network 100.

The authentication server 12 is implemented by, for example, one or more computers connected to the communication network 2, and executes an authentication process for authenticating the external system 120, the information terminal 111, etc., which use the communication system 1.

Note that the management server 11 and the authentication server 12 may be included in, for example, one management system 10, or may be distributed among more servers. Also, the communication system 1 may use the authentication server 12 external to the communication system 1.

The relay server 13 is implemented by, for example, one or more computers connected to the communication network 2, and relays communication between the external system 120 or the information terminal 111 and the communication device 14. Note that the relay server 13 may be included in the management system 10.

The local network 100 is, for example, a network such as an in-house LAN in which access from the external network such as the communication network 2 and the remote network 110 is restricted by a firewall or the like.

In FIG. 1, the management server 11 and the communication device 14 are assumed to be set in advance to communicate by, for example, a Message Queue Telemetry Transport (MQTT) protocol or the like. For example, upon activation, the communication device 14 requests the management server 11 to establish a connection using the MQTT protocol or the like, establishes communication, and maintains a communicable state.

Also, access to the communication device 14, server 101, image forming apparatus 102, etc. in the local network 100 from the information terminal 111, the external system 120, the relay server 13, etc. is prohibited.

The communication device 14 is, for example, the computer including a communication function. The communication device 14 connects to the relay server 13 according to an instruction from the management server 11, and relays communication between the relay server 13 and the services provided by the information processing apparatus in the local network 100. In addition, the communication device 14 may include a function such as a router or the firewall, or may be provided separately from the router or the firewall. Also, the functions of the communication device 14 may be implemented by the server 101 or the like in the local network 100, for example.

The server 101 is a computer connected to the local network 100, and includes the function of a web server that provides the web service such as a business system and an attendance management system.

The image forming apparatus 102 is, for example, the information processing apparatus such as a multifunction peripheral (MFP) including a scan function, a copy function, a print function, a facsimile function, and the like in one housing. The image forming apparatus 102 provides a web Application Programming Interface (API) for using an image forming service such as the facsimile function provided in the image forming apparatus 102 from outside. Note that the server 101 and the image forming apparatus 102 are examples of information processing apparatuses that provide services within the local network 100.

In the system configuration described above, a user using the information terminal 111 accesses a web page provided by the management server 11 using the web browser or the like and logs in, for example, to use a facsimile transmission service provided by the image forming apparatus 102. The user selects, for example, the facsimile transmission service provided by the image forming apparatus 102 from the web page and requests a connection to the facsimile transmission service provided by the image forming apparatus 102.

The authentication server 12 authenticates the information terminal 111 (or the user) that accesses the management server 11, and issues authentication information such as an access token to the information terminal 111 that has been successfully authenticated.

In response to receiving a connection request including the access token issued by the authentication server 12 from the information terminal 111, the management server 11 issues a session identifier (ID), which is identification information for identifying a communication session. In addition, the management server 11 notifies the communication device 14 of the issued session ID to instruct connection to the relay server 13 and to relay communication between the relay server 13 and the image forming apparatus 102. Further, the management server 11 notifies the information terminal 111 of a request source of the issued session ID.

The communication device 14 connects to the relay server 13 according to the instruction from the management server 11 using the notified session ID. For example, the communication device 14 connects to the relay server 13 in a first communication 3 using Web Socket over Hypertext Transfer Protocol Secure (HTTPS), hereinafter referred to as wss.

The information terminal 111 connects to the relay server 13 using the session ID notified from the management server 11. For example, the information terminal 111 connects to the relay server 13 by a second communication 4 using the wss.

The relay server 13 relays communication between the first communication 3 and the second communication 4 connected to the relay server 13 using the same session ID. For example, the relay server 13 relays communication between the information terminal 111 and the communication device 14 by tunneling the first communication 3 and the second communication 4.

Through the above processing, the information terminal 111 connects to the communication device 14 using the wss. In addition, the information terminal 111 performs, for example, the facsimile transmission using the web API provided by the image forming apparatus 102, since the communication device 14 relays communication between the relay server 13 and the image forming apparatus 102 according to an instruction from the management server 11.

Similarly, there is a request to enable using the service provided by the information processing apparatus within the local network 100 from the external system 120. In the present embodiment, the communication system 1 and a communication method that enables the external system 120 to use the services provided by the information processing apparatus in the local network 100 is mainly described.

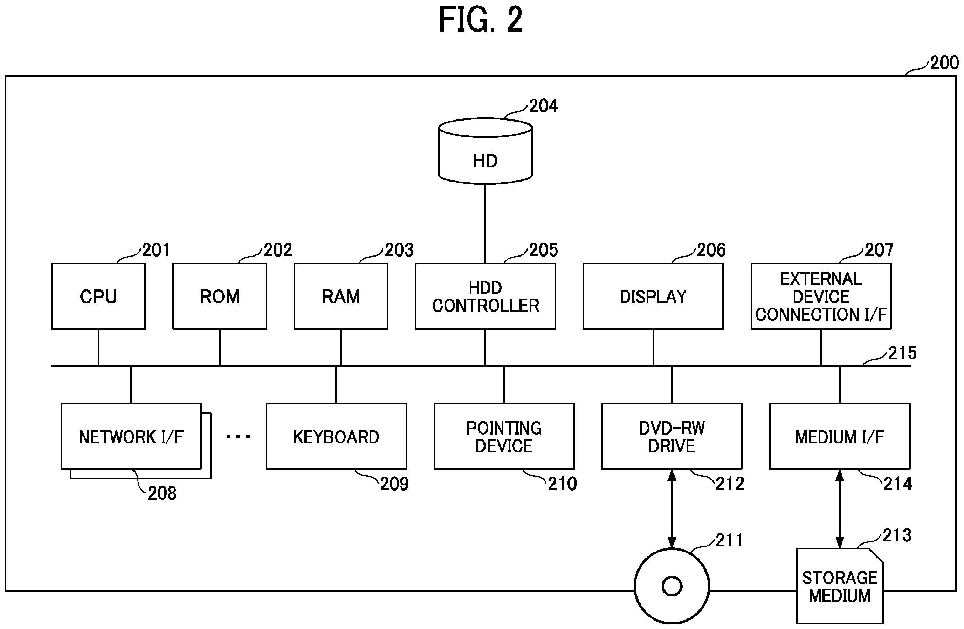

The information terminal 111 and the communication device 14 have the hardware configuration of a computer 200, for example, as illustrated in FIG. 2. The management system 10, the management server 11, the authentication server 12, the relay server 13, the external system 120, the server 101, and the like are implemented by one or more computers 200.

FIG. 2 is a block diagram illustrating an example of the hardware configuration of the computer according to the present embodiment. The computer 200 includes, for example, a central processing unit (CPU) 201, a read only memory (ROM) 202, a random access memory (RAM) 203, a hard disk (HD) 204, a hard disk drive (HDD) controller 205, a display 206, an external device connection interface (I/F) 207, one or more network I/Fs 208, a keyboard 209, a pointing device 210, a digital versatile disk rewritable (DVD-RW) drive 212, a medium I/F 214, a bus line 215, and the like as illustrated in FIG. 2.

The CPU 201 controls entire operation of the computer 200. The ROM 202 stores a program used for driving the computer 200, such as an initial program loader (IPL). The RAM 203 is used as, for example, a work area for the CPU 201. The HD 204 stores, for example, programs such as an operating system (OS), an application, and a device driver, and various data. The HDD controller 205 controls, for example, reading or writing of various data to and from the HD 204 according to control of the CPU 201.

The display 206 displays various information such as a cursor, menu, window, character, or image. The display 206 may be provided outside the computer 200. The external device connection I/F 207 connects various external devices to the computer 200. One or more network I/Fs 208 are interfaces for data communication using, for example, the communication network 2, the local network 100, the remote network 110, or the like.

The keyboard 209 is an example of an input device provided with a plurality of keys for allowing the user to input characters, numerals, or various instructions. The pointing device 210 is an example of the input device that allows the user to select or execute a specific instruction, select a target for processing, or move the cursor being displayed. The keyboard 209 and the pointing device 210 may be provided outside the computer 200.

The DVD-RW drive 212 reads and writes various data from and to a DVD-RW 211, which is an example of a removable storage medium. The DVD-RW 211 is not limited to the DVD-RW and may be another removable recording medium. The medium I/F 214 controls reading or writing (storage) of data to a storage medium 213 such as a flash memory. The bus line 215 includes an address bus, a data bus, various control signals, and the like for electrically connecting each of above components.

The configuration of the computer 200 illustrated in FIG. 2 is an example. The computer 200 may have any other configuration as long as the computer includes, for example, the CPU 201, the ROM 202, the RAM 203, one or more network I/Fs 208, and the bus line 215.

In the following description, the image forming apparatus 102 is assumed to be the MFP having the scan function, the copy function, the print function, the facsimile function, and the like in one housing.

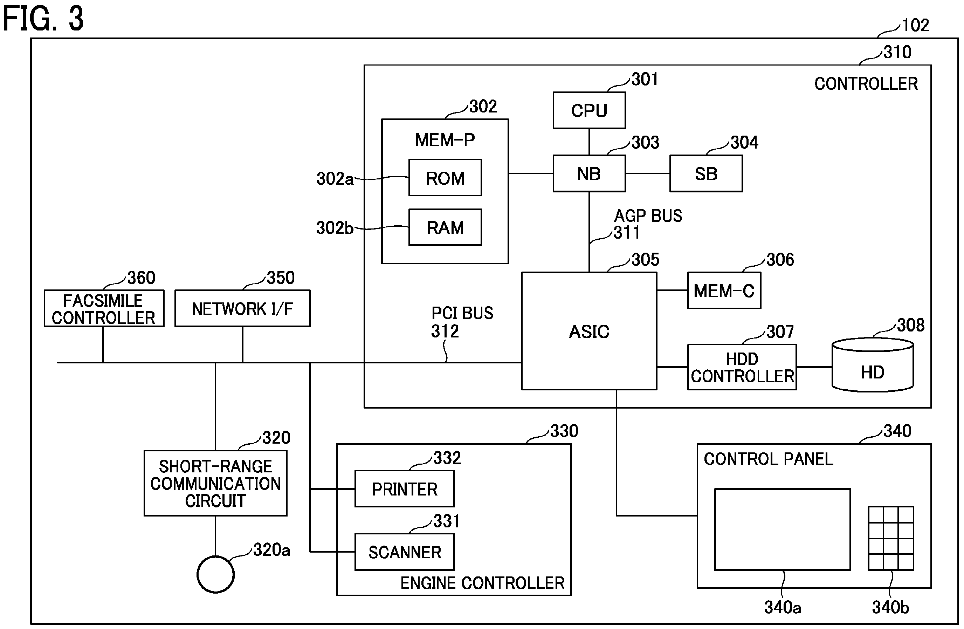

FIG. 3 is a block diagram illustrating a hardware configuration of the image forming apparatus according to an embodiment of the present disclosure. For example, as illustrated in FIG. 3, the image forming apparatus 102 includes a controller 310, a short-range communication circuit 320, an engine controller 330, a control panel 340, a network I/F 350, a facsimile controller 360, and the like.

The controller 310 includes a CPU 301 as a main processor, a system memory (MEM-P) 302, a north bridge (NB) 303, a south bridge (SB) 304, an Application Specific Integrated Circuit (ASIC) 305, a local memory (MEM-C) 306, an HDD controller 307, and an HD 308 as a storage unit. The NB 303 and the ASIC 305 are connected through an Accelerated Graphics Port (AGP) bus 311.

Among the components, the CPU 301 is a control unit that performs overall control of the image forming apparatus 102. The NB 303 connects the CPU 301 with the MEM-P 302, SB 304, and AGP bus 311. The NB 303 includes a memory controller for controlling reading or writing of various data with respect to the MEM-P 302, a Peripheral Component Interconnect (PCI) master, and an AGP target.

The MEM-P 302 includes a ROM 302a as a memory that stores program and data for implementing various functions of the controller 310 and RAM 302b as a memory that deploys the program and data, or as a drawing memory that stores drawing data for printing. The program stored in the ROM 302a may be stored in any computer-readable storage medium, such as a compact disc-read only memory (CD-ROM), compact disc-recordable (CD-R), or digital versatile disc (DVD), in a file format installable or executable by the computer for distribution.

The SB 304 connects the NB 303 with a peripheral component interconnect (PCI) device or a peripheral device. The ASIC 305 is an integrated circuit (IC) dedicated to an image processing use, and connects the AGP bus 311, the PCI bus 312, the HDD controller 307, and the MEM-C 306 as a bridge. The ASIC 305 includes a PCI target and AGP master, an arbiter (ARB) that forms the core of the ASIC 305, a memory controller that controls the MEM-C 306, and a plurality of Direct Memory Access Controllers (DMACs) that rotate image data using hardware logic, and a PCI unit for transferring data between the scanner 331 and the printer 332 through the PCI bus 312. Note that the ASIC 305 may be connected to a universal serial bus (USB) interface or an Institute of Electrical and Electronics Engineers 1394 (IEEE 1394) interface.

The MEM-C 306 is a local memory used as a buffer for image data to be copied or a code buffer. The HD 308 is a storage for accumulating image data, accumulating font data used for printing, and accumulating forms. Note that the HD 308 may store programs such as an OS, applications, and device drivers, and various data, for example.

The HDD controller 307 controls reading or writing of data to the HD 308 under the control of the CPU 301. The AGP bus 311 is a bus interface for a graphics accelerator card, which has been proposed to accelerate graphics process. Through directly accessing the MEM-P 302 by high-throughput, speed of the graphics accelerator card is improved.

The short-range communication circuit 320 performs various short-range wireless communications using an antenna 320a for the short-range communication circuit and the like. The engine controller 330 includes, for example, the scanner 331, the printer 332, and the like. The scanner 331 is a reading device that reads an original or the like. The printer 332 is a printing device that prints an image on a sheet of paper in accordance with print data. The scanner 331 or printer 332 includes, for example, image processing such as error diffusion and gamma conversion.

The control panel 340 includes a display panel 340a implemented by, for example, a touch panel that displays current settings or a selection screen and receives a user input and operation panel 340b that includes a numeric keypad that receives set values of various image forming parameters such as image density parameter and a start key that accepts an instruction for starting copying. The controller 310 controls the entire image forming apparatus 102, and, for example, controls drawing, communication, input from the control panel 340, and the like.

In response to an instruction to select a specific application through the control panel 340, for example, using a mode switch key, the image forming apparatus 102 selectively performs a document box function, a copy function, a print function, and a facsimile function. The document box mode is selected when the document box function is selected, the copy mode is selected when the copy function is selected, the print mode is selected when the print function is selected, and the facsimile mode is selected when the facsimile function is selected.

The network I/F 350 is an interface for data communication using a communication network. The facsimile controller 360 performs facsimile transmission and reception.
Note that the facsimile controller 360 may be implemented by a program or the like executed by the CPU 301. The short-range communication circuit 320, the network I/F 350, and the facsimile controller 360 are electrically connected to the ASIC 305 through the PCI bus 312, for example.

Note that the server 101 and the image forming apparatus 102 are examples of the information processing apparatuses that provide services within the local network 100. The information processing apparatus that provides services within the local network 100 may be, for example, a projector (PJ), an interactive white board ((IWB): a whiteboard having an electronic blackboard function capable of mutual communication)), and an output device such as a digital signage. Further, the information processing apparatus that provide services within the local network 100 may be head up display (HUD) devices, industrial machines, imaging devices, sound collecting device, medical devices, network home appliances, and the like.

The functional configuration of each device related to the communication system 1 is described.

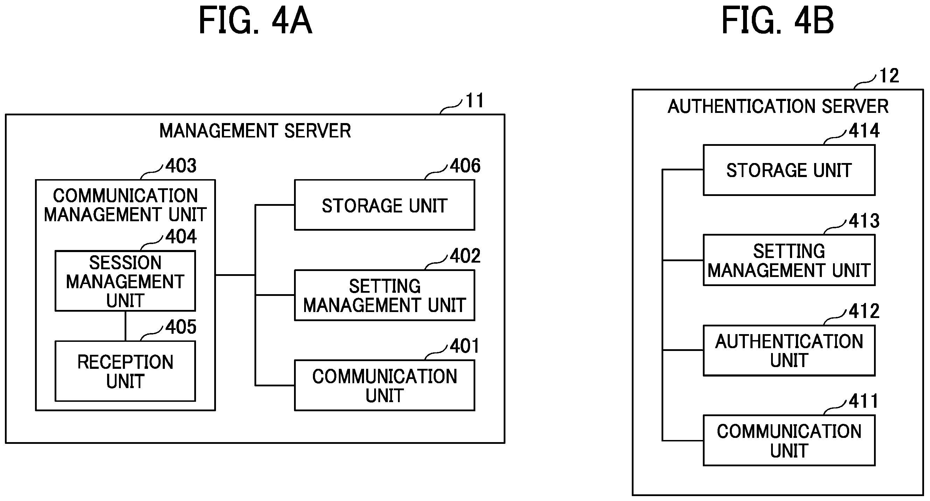

FIG. 4A is a diagram illustrating an example of a functional configuration of a management server according to a first embodiment of the present disclosure. The management server 11 implements, for example, a communication unit 401, a setting management unit 402, a communication management unit 403, a storage unit 406, and the like by one or more computers 200 executing a predetermined program. Note that at least a part of the above functional units may be implemented by hardware.

The communication unit 401 connects the management server 11 to the communication network 2 using, for example, the network I/F 208 and executes a communication process for communicating with other devices.

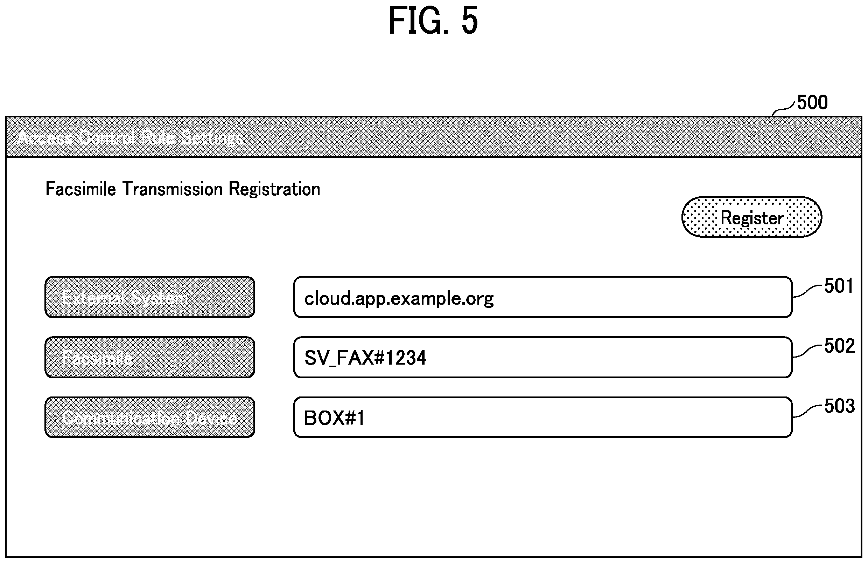

The setting management unit 402 receives setting of access control rule corresponding to a combination of the external system 120 and the service provided by the information processing apparatuses in the local network 100 and executes a setting management process to store the settings in the storage unit 406 or the like. For example, the setting management unit 402 includes the function of the web server that provides a web page that displays an access control rule setting screen 500 as illustrated in FIG. 5 and the access control rule set on the access control rule setting screen 500 is stored in the storage unit 406 or the like.

FIG. 5 is a diagram illustrating an example of the access control rule setting screen according to the first embodiment of the present disclosure. In the example of FIG. 5, the access control rule setting screen 500 displays, as an example, an external system setting field 501, a facsimile setting field 502, a communication device setting field 503, and the like. In the external system setting field 501, for example, a Uniform Resource Locator (URL) of the external system 120, identification information, or the like is set. In the facsimile setting field 502, for example, identification information for identifying a facsimile (the image forming apparatus 102 in the example of FIG. 1) that provides a facsimile service such as a facsimile transmission service, a device name, an address, or the like is set. In the communication device setting field 503, for example, identification information, a device name, an address, or the like for identifying the communication device 14 that relays communication between the relay server 13 and the facsimile is set.

A user such as the user who uses the communication system 1, an administrator who manages the communication system 1, or a provider who provides services sets the access control rules using the access control rule setting screen 500. For example, the user sets the information of the external system 120 in the external system setting field 501, sets the information of the image forming apparatus 102 in the facsimile setting field 502, and sets the information of the communication device 14 in the communication device setting field 503. The management server 11 identifies the communication device 14 and the image forming apparatus 102 to be used based on the access control rule settings, for example, in response to receiving a request to use the facsimile transmission service from the external system 120.

The communication management unit 403 includes, for example, a reception unit 405 and a session management unit 404. The reception unit 405 executes a reception process of receiving a request for using a service provided by the information processing apparatus in the local network 100 from the external system 120. For example, the reception unit 405 provides the external system 120 with a web API or the like for receiving the request for using the service.

The session management unit 404 executes a session management process for managing a communication session from the external system 120 for using services provided by information processing apparatuses in the local network 100. For example, the session management unit 404 instructs the communication device 14 to connect to the relay server 13 and relay between the relay server 13 and the requested service according to the service use request received by the reception unit 405 and the access control rule managed by the setting management unit 402. Note that the function of the reception unit 405 and the function of the session management unit 404 may be implemented by one communication management unit 403.

The storage unit 406 executes a storage process to store various information or data such as the access control rule managed by the setting management unit 402 in the HD 204, the RAM 203, an external storage device, or the like.

Note that the functional configuration of the management server 11 illustrated in FIG. 4A is an example. For example, the communication management unit 403 may be divided into an application server including the reception unit 405 and a service platform including the session management unit 404.

FIG. 4B is a diagram illustrating an example of a functional configuration of the authentication server according to the first embodiment of the present disclosure. The authentication server 12 implements, for example, a communication unit 411, an authentication unit 412, a setting management unit 413, a storage unit 414, and the like by one or more computers 200 executing a predetermined program. Note that at least a part of the above functional units may be implemented by hardware.

The communication unit 411 connects the authentication server 12 to the communication network 2 using, for example, the network I/F 208 and executes a communication process for communicating with other devices.

The authentication unit 412 executes an authentication process for authenticating an authentication target such as a user, a device, or a system in response to a request from the management server 11, the relay server 13, the external system 120, or the information terminal 111, for example. For example, the authentication unit 412 authenticates the external system 120 by public key authentication, API key authentication, multi-factor authentication, and the like and transmits an access token that is authentication information for using the communication system 1 to the successfully authenticated external system 120.

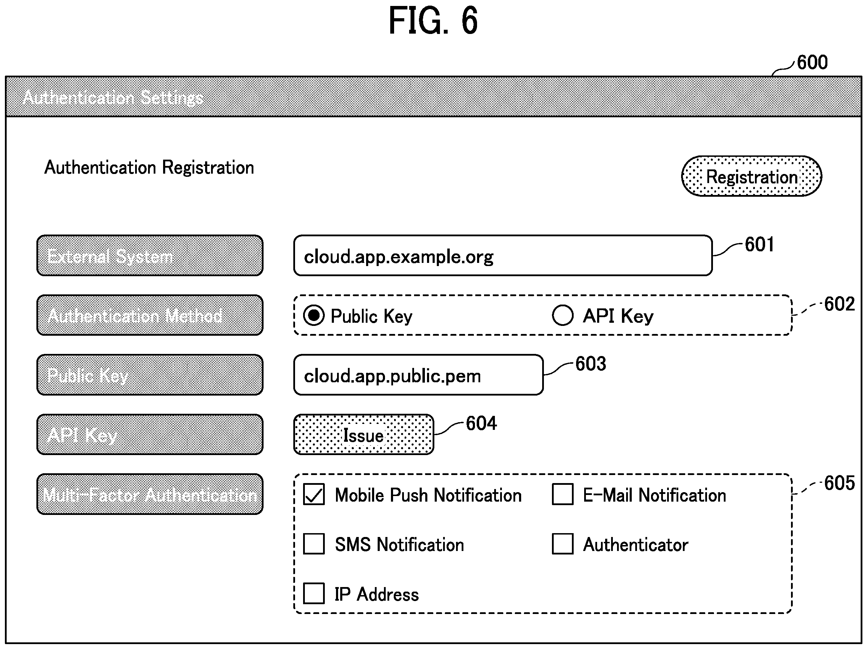

The setting management unit 413 executes a setting management process for storing setting information regarding the authentication server 12 in the storage unit 414 or the like. For example, the setting management unit 413 includes the function of the web server that provides a web page displaying an authentication setting screen 600 as illustrated in FIG. 6 and stores the authentication setting information set on the authentication setting screen 600 in the storage unit 414 or the like.

FIG. 6 is a diagram illustrating an example of the authentication setting screen according to the first embodiment of the present disclosure. In the example of FIG. 6, the authentication setting screen 600 includes, as an example, an external system setting field 601, an authentication method setting field 602, a public key setting field 603, an API key issuance button 604, and a multi-factor authentication setting field 605 and the like. Here, in the external system setting field 601, the URL, identification information, or the like of the external system 120 is to be set. An authentication method to be applied to the external system 120 is set in the authentication method setting field 602.

In the public key setting field 603, for example, a file name of a public key applied to the external system 120 is set. Note that in the case the authentication method is not the public key authentication, no setting is to be set in the public key setting field 603. The API key issuance button 604 is to be pressed to issue an API key in the API key authentication. In the multi-factor authentication setting field 605, an authentication method to be executed is set when performing the multi-factor authentication. The authentication server 12 authenticates, for example, the external system 120 using the authentication method set on the authentication setting screen 600, and issues an access token to the successfully authenticated external system 120.

The storage unit 414 executes a storage process for storing various information or data such as setting information of the authentication server 12 managed by the setting management unit 413 in the HD 204, the RAM 203, an external storage device, or the like.

Note that the communication system 1 may use an authentication service external to the communication system 1 to perform, for example, open ID authentication or OAuth authentication, and issue the access token to the external system 120 or the like.

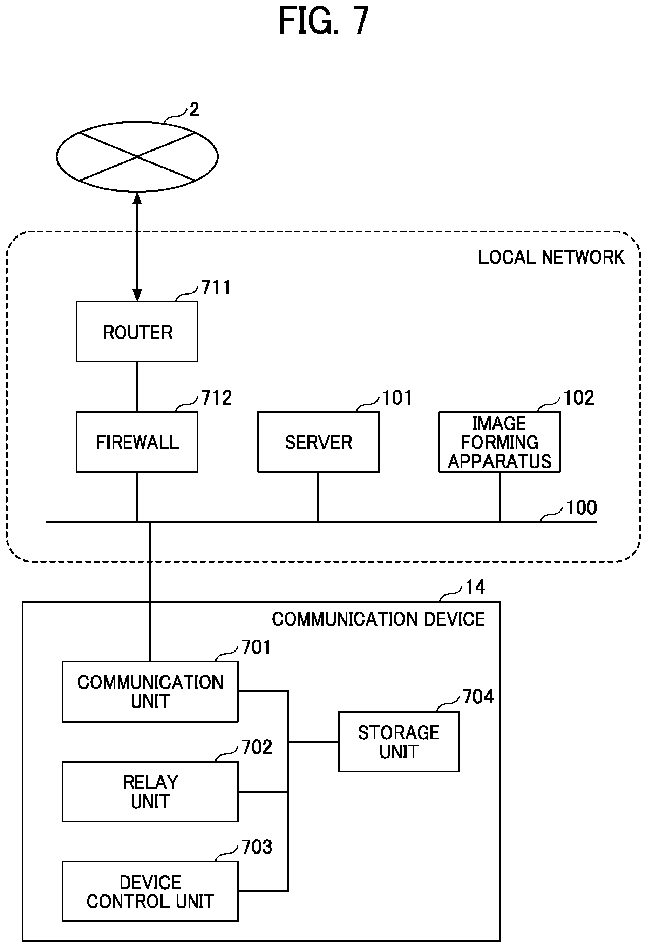

FIG. 7 is a diagram illustrating an example of a functional configuration of the communication device, according to the first embodiment of the present disclosure. In the example of FIG. 7, the local network 100 is connected to the communication network 2 through a router 711 and a firewall 712. However, FIG. 7 is an example, and, for example, the communication device 14 may include the functions of the router 711 and the firewall 712. In the example of FIG. 7, the server 101 and the image forming apparatus 102 are connected to the local network 100. The server 101 is, for example, an information processing apparatus that functions as the web server that provides predetermined web services such as the business system and the attendance management system. The image forming apparatus 102 is, for example, the information processing apparatus such as the MFP that provides the image forming service such as the facsimile transmission service.

The communication device 14 implements, for example, a communication unit 701, a relay unit 702, a device control unit 703, a storage unit 704, and the like by executing a predetermined program on the computer 200 implementing the communication device 14. Note that at least a part of the above functional units may be implemented by hardware.

The communication unit 701, for example, uses the network I/F 208 to connect the communication device 14 to the local network 100 and execute a communication process for communicating with another device.

The relay unit 702 connects to the relay server 13 from within the local network 100 according to an instruction from the management server 11, and executes a relay process for relaying communication between the relay server 13 and the information processing apparatus that provide service within the local network 100.

For example, the device control unit 703 requests the management server 11 to establish a connection at startup using the MQTT protocol or the like, establishes communication, and maintains a communicable state with the management server 11.

The storage unit 704 is implemented by, for example, a program executed by the computer 200 implementing the communication device 14 and a storage device such as the HD 204, and stores various information such as setting information of the communication device 14.

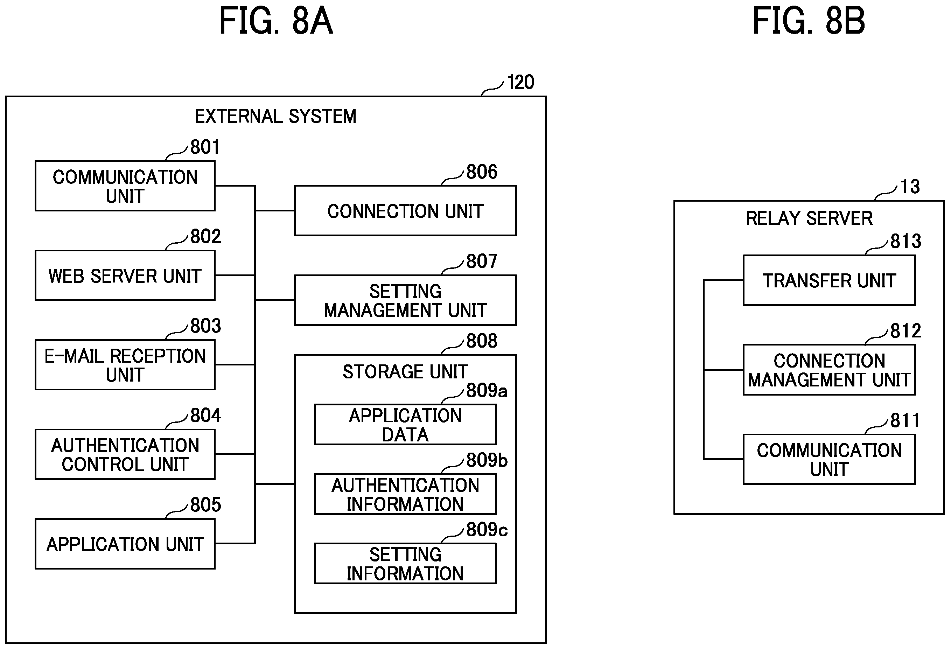

FIG. 8A is a diagram illustrating an example of a functional configuration of the external system according to the first embodiment of the present disclosure. The external system 120 implements, for example, a communication unit 801, a web server unit 802, an e-mail reception unit 803, an authentication control unit 804, an application unit 805, a connection unit 806, a setting management unit 807, a storage unit 808, and the like by a program executed by one or more computers 200. Note that at least a part of the above functional units may be implemented by hardware.

The communication unit 801 connects the external system 120 to the communication network 2 using, for example, the network I/F 208 and executes a communication process for communicating with other devices.

The web server unit 802 provides web pages, web APIs, and the like for using the external system 120 to a terminal device (for example, the information terminal 111) used by the user of the external system 120.

The e-mail reception unit 803 receives an e-mail requesting use of the external system 120 from the terminal device (for example, the information terminal 111 or the like) used by the user of the external system 120.

The authentication control unit 804 requests authentication from the authentication server 12 when using a service provided by an information processing apparatus in the local network 100 and executes an authentication control process for acquiring an access token or the like for using the communication system 1. Note that the access token is an example of authentication information for using the communication system 1.

The application unit 805 is a cloud application provided by the external system 120.

The cloud application according to the present embodiment uses service provided by the information processing apparatus within the local network 100. For example, the application unit 805 may use a facsimile transmission service provided by the image forming apparatus 102 in the local network 100 to transmit document data. Alternatively, the application unit 805 may acquire business data to be processed from a business service provided by the server 101 in the local network 100 and perform processing. Further, the application unit 805 may execute an optical character recognition (OCR) process on the document data, and may store a reading result in a storage service provided by the server 101 within the local network 100.

The connection unit 806 connects from the external system 120 to the relay server 13 based on an instruction from the management server 11 and executes a connection process for communicating with the information processing apparatus that provides the service within the local network 100 through the relay server 13 and the communication device 14.

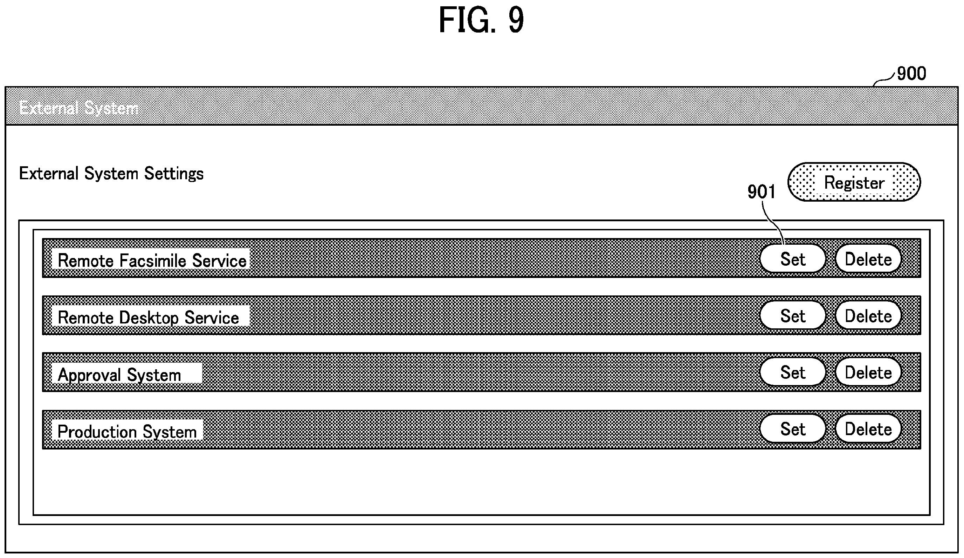

The setting management unit 807 executes a setting management process for storing setting information 809c regarding the external system 120 in the storage unit 808 or the like. For example, the setting management unit 807 includes the function of the web server that provides a web page for displaying an external system setting screen 900 as illustrated in FIG. 9, for example.

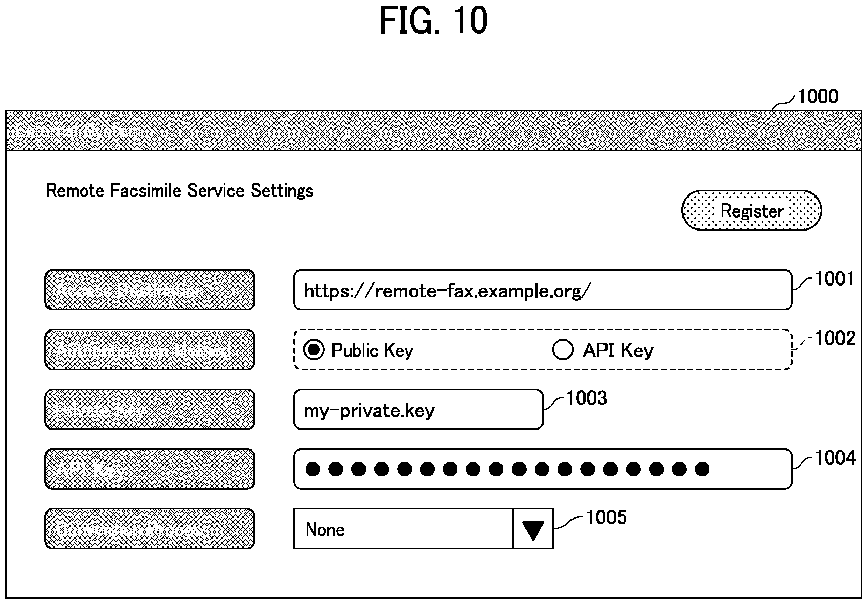

FIG. 9 is a diagram illustrating an example of the external system setting screen according to the first embodiment of the present disclosure. In the example of FIG. 9, a list of a plurality of services provided by the external system 120 is displayed on the external system setting screen 900. For example, in response to receiving selection of the "set" button 901 of the remote facsimile service, the setting management unit 807 displays a remote facsimile service setting screen 1000 as illustrated in FIG. 10 on the web page.

FIG. 10 is a diagram illustrating an example of a remote facsimile service setting screen according to the first embodiment of the present disclosure. In the example of FIG. 10, the remote facsimile service setting screen 1000 includes, as an example, an access destination setting field 1001, an authentication method setting field 1002, a private key setting field 1003, an API key setting field 1004, and a conversion process setting field 1005 and the like. For example, a URL for using the remote facsimile service of the external system 120 is entered in the access destination setting field 1001. For example, the authentication method set on the authentication setting screen 600 in FIG. 6 is set in the authentication method setting field 1002.

In the private key setting field 1003, the file name or the like of the private key for the public key authentication is entered. In the API key setting field 1004, for example, the API key issued on the authentication setting screen 600 in FIG. 6 is entered. In the conversion process setting field 1005, the presence or absence of conversion process, the conversion process to be used, or the like is set. The conversion process to be set in the conversion process setting field 1005 includes, for example, Portable Document Format (PDF) to Page Description Language (PDL) conversion for converting PDF data into PDL data. The setting management unit 807 stores setting information 809c regarding the external system 120 set on the setting screen 900 of the external system, the remote facsimile service setting screen 1000, etc. in the storage unit 808 or the like.

The storage unit 808 executes a storage process for storing various information managed by the external system 120 in the HD 204, the RAM 203, the external storage device, or the like. For example, the storage unit 808 stores application data 809a managed by the application unit 805, authentication information 809b for the external system 120 to use the communication system 1, the setting information 809c managed by the setting management unit 807, and the like. Note that the application data 809a may include, for example, a database managed by the application executed by the application unit 805, or the like. Also, the authentication information 809b may include, for example, the public key and the private key for the public key authentication, the API key for the API key authentication, or the like.

FIG. 8B is a diagram illustrating an example of a functional configuration of the relay server 13 according to the first embodiment of the present disclosure.

The relay server 13 implements a communication unit 811, a connection management unit 812, a transfer unit 813, and the like, for example, by executing a predetermined program on one or more computers 200. Note that at least a part of the above functional units may be implemented by hardware.

The communication unit 811 connects the relay server 13 to the communication network 2 using, for example, the network I/F 208 or the like, and performs a communication process for communicating with other devices.

The connection management unit 812 executes a connection management process for managing connection to the relay server 13 of the external system 120, the communication device 14, the information terminal 111, or the like that requests connection to the relay server 13. As an example, the connection management unit 812 issues a session ID in response to a request from the management server 11, and allows the connection to the relay server 13 in response to a connection request including the issued session ID. As another example, the connection management unit 812 may use the authentication server 12 to authenticate authentication information such as the access token included in the connection request, and allows the connection to the relay server 13 in response to a successful authentication.

For example, the transfer unit 813 causes the connection source system or device connected to the relay server 13 with a connection request containing the same session ID to participate in the same communication session and executes a transfer process for transferring data so that data is exchanged to each other.

For example, assume that the communication device 14 uses the session ID notified from the management server 11 to connect to the relay server 13 in the first communication 3. Also, assume that the external system 120 also connects to the relay server by third communication 5 using the same session ID as the communication device 14 notified from the management server 11. In this case, the relay server 13 transfers the data transmitted by the external system 120 to the communication device 14 by tunneling the first communication 3 and the third communication 5, and transfers the data transmitted by the communication device 14 to the external system 120.

A communication method according to the first embodiment is described in the following.

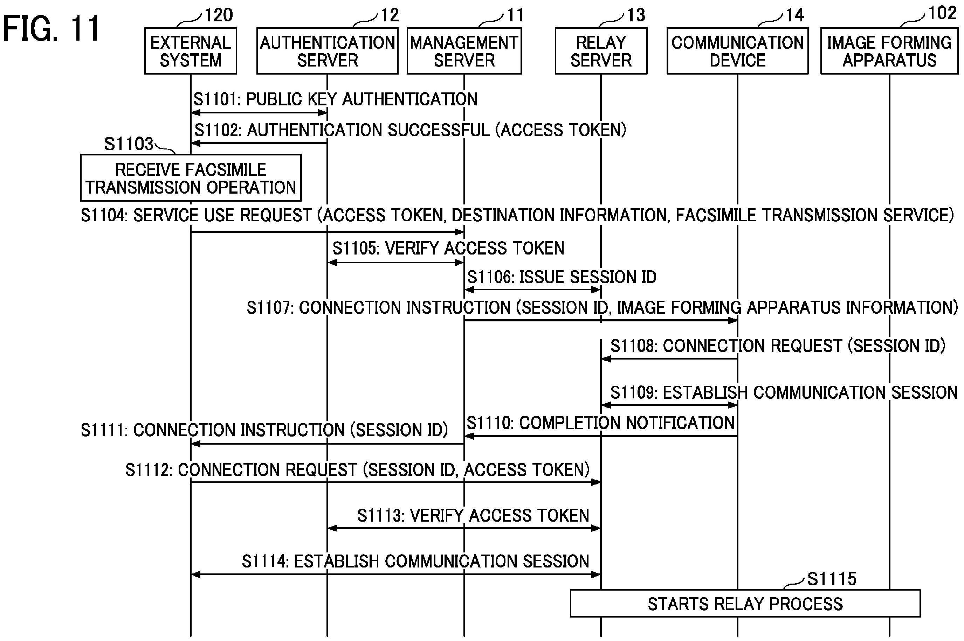

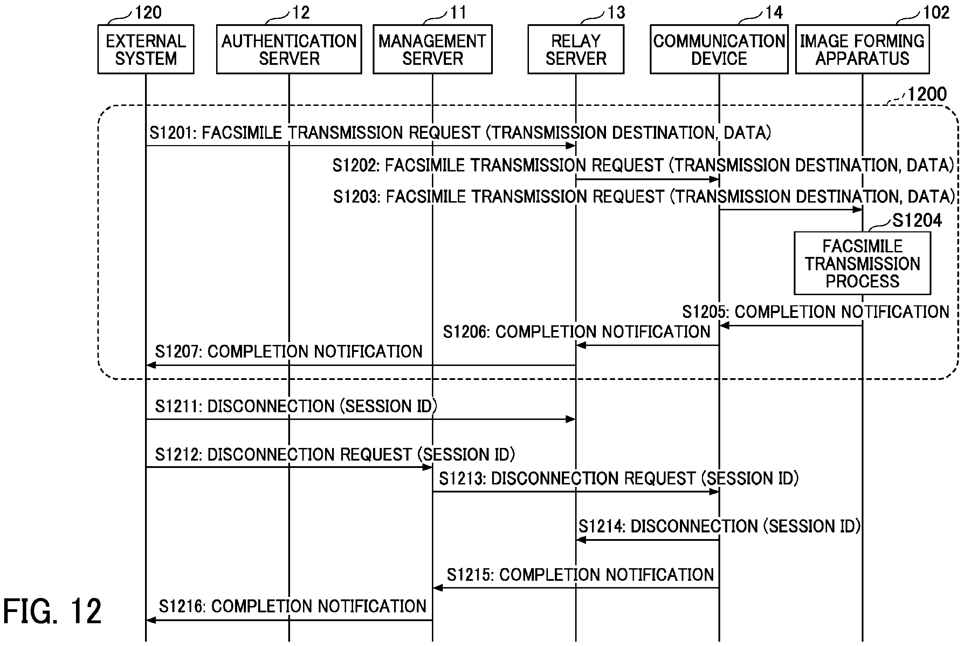

FIGs. 11 and 12 are sequence diagrams illustrating an example of a process executed by the communication system according to the first embodiment of the present disclosure. The process is an example of a process executed by the communication system 1 in the case the external system 120 registered in the communication system 1 uses the facsimile transmission service provided by the image forming apparatus 102 within the local network 100.

In step S1101, the authentication control unit 804 of the external system 120 executes an authentication process by, for example, the public key authentication with the authentication server 12. In step S1102, the external system 120 succeeds in authentication and acquires an access token from the authentication server 12, since the external system 120 is a valid system registered in the communication system 1. Note that in the case the external system 120 is not registered in the communication system 1 and the authentication fails, the communication system 1 terminates the process of FIG. 11.

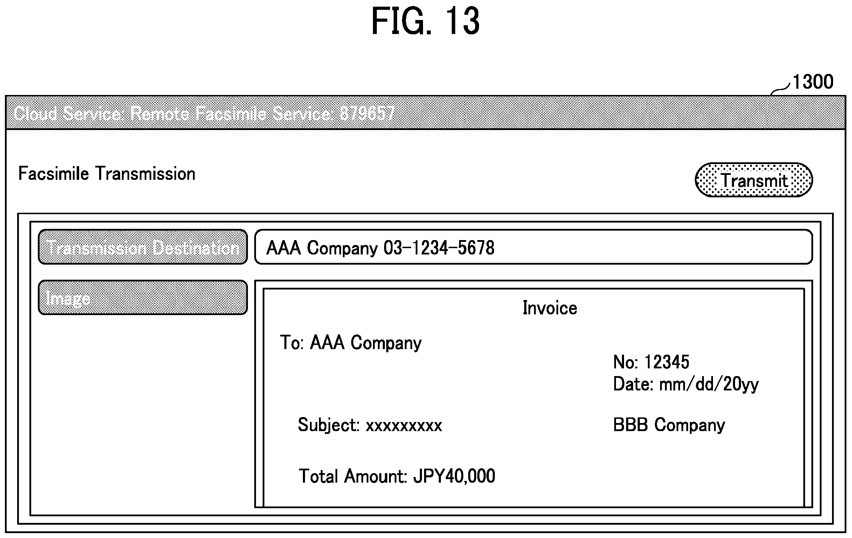

In step S1103, the web server unit 802 of the external system 120 displays, for example, a facsimile transmission screen 1300 as illustrated in FIG. 13 on the web page and receives a facsimile transmission operation by the user. Alternatively, the web server unit 802 may use a web API provided by the web server unit 802 to receive a facsimile transmission request from the terminal device such as the information terminal 111 used by the user.

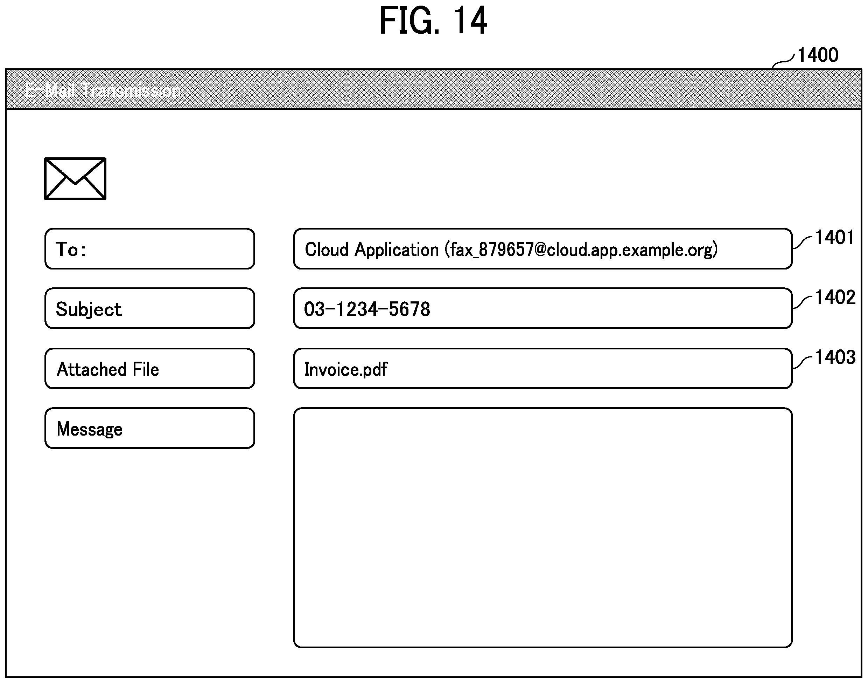

As another example, the e-mail reception unit 803 of the external system 120 may receive the facsimile transmission request by e-mail from the terminal device such as the information terminal 111 used by the user. For example, the user who uses the facsimile transmission service sets the e-mail address of the external system 120 in a destination input field 1401 on the e-mail transmission screen 1400 illustrated in FIG. 14 and enters destination information of the facsimile transmission in a subject input field 1402. In addition, the user may request the external system 120 to send by facsimile by setting document data to be sent (for example, a PDF file) in an attached file setting field 1403 and sending the e-mail.

In step S1104, the application unit 805 of the external system 120 transmits a service use request requesting use of the facsimile transmission service to the management server 11. The service use request includes, for example, the access token acquired from the authentication server 12, the destination information of the facsimile transmission, information indicating that the service to be used is the facsimile transmission service, and the like.

In step S1105, in response to receiving the service use request from the external system 120, the communication management unit 403 of the management server 11 uses the authentication server 12 to verify the access token included in the service use request. Thereby, the communication management unit 403 verifies the validity of the received service use request.

Here, since the service use request includes the valid access token acquired from the authentication server 12, the communication system 1 executes the process from step S1106. In the case the service use request does not include the valid access token, the communication system 1 terminates the process of FIG. 11.

In step S1106, the communication management unit 403 of the management server 11 issues a session ID that identifies a communication session for the requested facsimile transmission service. For example, the communication management unit 403 may request the relay server 13 to issue the session ID and acquire the session ID from the relay server 13, or the communication management unit 403 may issue the session ID and notify the relay server 13 of the session ID.

In step S1107, the communication management unit 403 of the management server 11 transmits a connection instruction to the communication device 14 based on the service use request received from the external system 120 and the preset access control rule. For example, the communication management unit 403 identifies the communication device 14 and the image forming apparatus 102 to be used for the facsimile transmission service based on the access control rule set on the access control rule setting screen 500 described in FIG. 5 and the service use request. Further, the communication management unit 403 transmits a connection instruction to the identified communication device 14 to connect to the relay server 13 and to relay communication between the relay server 13 and the facsimile transmission service provided by the image forming apparatus 102. The connection instruction includes, for example, the session ID used for connection to the relay server 13 and information on the image forming apparatus 102 that provides the facsimile transmission service.

In step S1108, the relay unit 702 of the communication device 14 transmits to the relay server 13, a connection request including the session ID included in the connection instruction received from the management server 11.

In step S1109, the connection management unit 812 of the relay server 13 establishes a communication session (first communication 3) with the communication device 14 based on a valid session ID included in the connection instruction. Note that the connection management unit 812 of the relay server 13 terminates the process of FIG. 11 in the case the connection instruction does not include the valid session ID.

In step S1110, the relay unit 702 of the communication device 14 transmits to the management server 11, a completion notification indicating that the communication session is established with the relay server 13.

In step S1111, the communication management unit 403 of the management server 11 transmits to the external system 120 that transmitted the service use request, a connection instruction for connecting to the relay server 13. The connection instruction includes the same session ID as the session ID transmitted to the communication device 14 by the communication management unit 403.

In step S1112, the connection unit 806 of the external system 120 transmits a connection request requesting connection to the relay server 13 according to the connection instruction from the management server 11. The connection request includes the session ID acquired in step S1111, the access token acquired in step S1102, and the like.

In response to receiving the connection request from the external system 120, the connection management unit 812 of the relay server 13 uses the authentication server 12 to verify the access token included in the connection request in step S1113. Here, the communication system 1 executes the process from step S1114, since the connection request includes the valid access token acquired from the authentication server 12.

In step S1114, the connection management unit 812 of the relay server 13 establishes a communication session (third communication 5) with the external system 120 based on the valid access token included in the connection request from the external system 120. Also, the connection management unit 812 allows the external system 120 to participate in the same communication session as the communication device 14 based on the session ID included in the connection request. As a result, the transfer unit 813 of the relay server 13 transfers the data transmitted by the external system 120 to the communication device 14 and starts the transfer process of transferring the data transmitted by the communication device 14 to the external system 120.

In step S1115, the relay unit 702 of the communication device 14 starts a relay process for relaying communication between the relay server 13 and the facsimile transmission service provided by the image forming apparatus 102. As a result, the external system 120 communicates with the image forming apparatus 102 and the like through the relay server 13 and the communication device 14.

Following the process of FIG. 11, the communication system 1 executes the process of FIG. 12. In step S1201, the application unit 805 of the external system 120 transmits the facsimile transmission request to the relay server 13 through the connection unit 806. The facsimile transmission request includes, for example, information about the transmission destination set on the facsimile transmission screen 1300 of FIG. 13, and transmission data such as a PDF file.

In step S1202, the transfer unit 813 of the relay server 13 transfers the facsimile transmission request received from the external system 120 to the communication device 14. In step S1203, the relay unit 702 of the communication device 14 transfers the facsimile transmission request received from the relay server 13 to the image forming apparatus 102.

In step S1204, the image forming apparatus 102 executes a facsimile transmission process for transmitting data to a designated facsimile transmission destination in response to the facsimile transmission request received from the communication device 14.

In step S1205, the image forming apparatus 102 transmits to the communication device 14, a completion notification indicating that the facsimile transmission process is completed. In step S1206, the communication device 14 transfers the completion notification received from the image forming apparatus 102 to the relay server 13. In step S1207, the relay server 13 transmits the completion notification received from the communication device 14 to the external system 120.

The external system 120 performs, for example, a facsimile transmission of multiple pages by executing the process 1200 illustrated in steps S1201 to S1207 multiple times.

The external system 120 executes the process of step S1211 after completing the process 1200 of steps S1201 to S1207. In step S1211, the connection unit 806 of the external system 120 disconnects the communication session (third communication 5) with the relay server 13 established in step S1114 of FIG. 11.

In step S1212, the connection unit 806 of the external system 120 transmits to the management server 11, a disconnection request for disconnecting the communication session (first communication 3) between the communication device 14 and the relay server 13. The disconnection request includes the session ID that identifies the communication session. In response to receiving the disconnection request, the communication management unit 403 of the management server 11 transmits the disconnection request including the session ID to the communication device 14 in step S1213.

In step S1214, the relay unit 702 of the communication device 14 disconnects the communication session (first communication 3) with the relay server 13. Also, in step S1215, the relay unit 702 transmits to the management server 11, a completion notification indicating that the communication session is disconnected. In step S1216, the communication management unit 403 of the management server 11 transmits to the external system 120, a completion notice indicating that the disconnection is completed.

Through the process described in FIGs. 11 and 12, the external system 120 uses the facsimile transmission service provided by the image forming apparatus 102 within the local network 100. Note that the facsimile transmission service is an example of the service provided by the information processing apparatus within the local network 100.

For example, instead of the facsimile setting field 502, a server setting field to set information of the server 101 may be provided in the access control rule setting screen 500 illustrated in FIG. 5, to register the access control rule. In this case, the external system 120 transmits the service use request of a service provided by the server 101 to the management server 11 in step S1104 of FIG. 11. Accordingly, the external system 120 is allowed to use the service provided by the server 101 within the local network 100.

In the first embodiment, the relay server 13 and the communication device 14 forward the received data, but the relay server 13 or the communication device 14 may include a conversion unit that converts the data format, protocol, or the like.

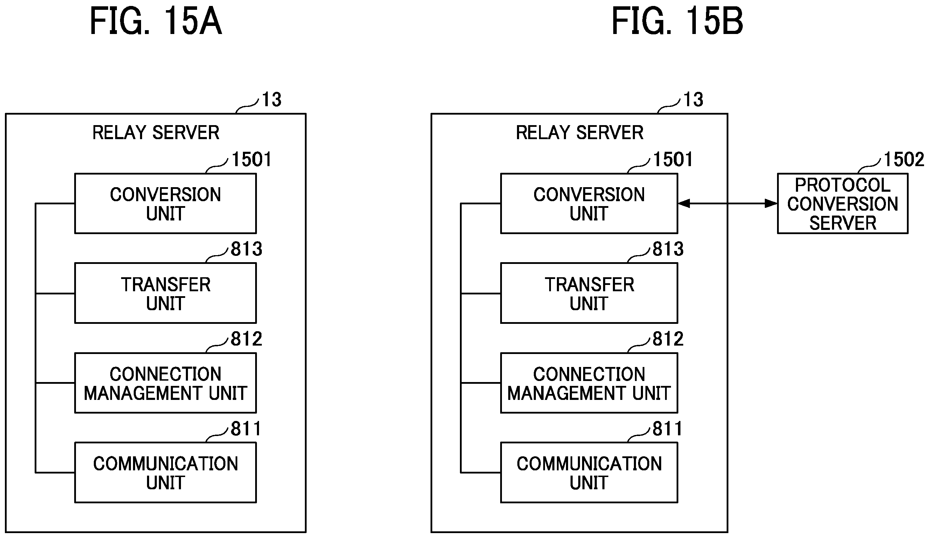

FIG. 15A is a diagram illustrating an example of functional configuration of the relay server 13 according to a second embodiment of the present disclosure. In the example of FIG. 15A, the relay server 13 according to the second embodiment includes a conversion unit 1501 in addition to the functional configuration of the relay server 13 according to the first embodiment described in FIG. 8B.

As an example, the conversion unit 1501 executes a data conversion process for converting the data format of data received from the external system 120. The conversion unit 1501 also executes the data conversion process for converting the data format of data received from the communication device 14. As a specific example, the conversion unit 1501 may convert PDF-format facsimile transmission data received from the external system 120 into PDL-format facsimile transmission data for the image forming apparatus 102. Such data conversion process may be set in a conversion process setting field 1005 on the remote facsimile service setting screen 1000 described with reference to FIG. 10, for example.

As another example, the conversion unit 1501 may execute a protocol conversion process for mutually converting the protocol of an application executed by external system 120 and an application executed by the server 101 in local network 100. As a specific example, the conversion unit 1501 may perform the protocol conversion process for mutually converting a protocol of a business improvement platform executed by the external system 120 and a protocol of an in-house system executed by the server 101.

Note that the conversion unit 1501 may perform the protocol conversion process (or the data conversion process) using an external protocol conversion server 1502 or the like, as illustrated in FIG. 15B.

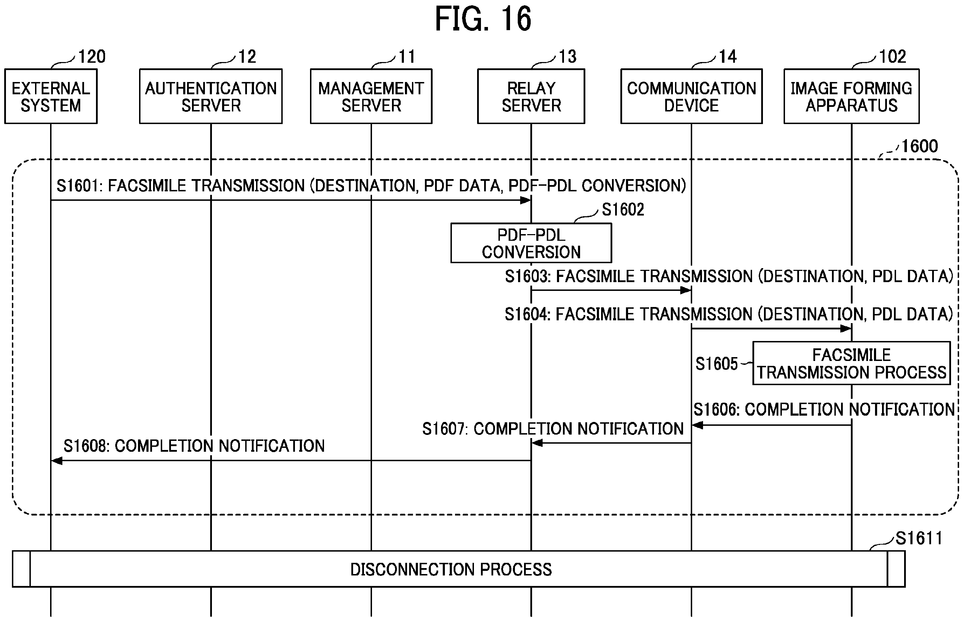

FIG. 16 is a sequence diagram illustrating an example of a process executed by the communication system according to the second embodiment of the present disclosure.

The process of FIG. 11 is assumed to be executed by the communication system 1 at the start of the process illustrated in FIG. 16. Further, "PDF-PDL conversion" is assumed to be set in the conversion process setting field 1005 in the remote facsimile service setting screen 1000 described with reference to FIG. 10. Since basic process is the same as the process of the communication system described with reference to FIG. 12, detailed description of the process similar to that of the first embodiment is omitted here.

In step S1601, the application unit 805 of the external system 120 transmits a facsimile transmission request to the relay server 13 through the connection unit 806. The facsimile transmission request includes, for example, information about the destination set on the facsimile transmission screen 1300 of FIG. 13, PDF data to be sent by facsimile transmission, and information requesting PDF-PDL conversion.

In step S1602, the conversion unit 1501 of the relay server 13 converts the PDF data included in the facsimile transmission request received from the external system 120 into PDL format data (hereinafter referred to as PDL data).

In step S1603, the transfer unit 813 of the relay server 13 converts the PDF data included in the facsimile transmission request received from the external system 120 into PDL data and transmits the facsimile transmission request to the communication device 14. In step S1604, the relay unit 702 of the communication device 14 transfers the facsimile transmission request received from the relay server 13 to the image forming apparatus 102.

In step S1605, the image forming apparatus 102 executes a facsimile transmission process for transmitting data to a designated facsimile transmission destination in response to the facsimile transmission request received from the communication device 14.

In step S1606, the image forming apparatus 102 transmits to the communication device 14, a completion notification indicating that the facsimile transmission process is completed. In step S1607, the communication device 14 transfers the completion notification received from the image forming apparatus 102 to the relay server 13. In step S1608, the relay server 13 transmits the completion notification received from the communication device 14 to the external system 120. Here, the conversion unit 1501 of the relay server 13 may convert the completion notification in a format compatible with the image forming apparatus 102 into a completion notification in a format compatible with the external system 120.

The external system 120 performs, for example, a facsimile transmission of multiple pages by executing a process 1600 including steps S1601 to S1608 multiple times.

After completing the process 1600 of steps S1601 to S1608, the external system 120 executes the disconnection process illustrated in steps S1211 to S1216 of FIG. 12, for example, in step S1611.

Through the process described above, the external system 120 uses the facsimile transmission service provided by the image forming apparatus 102 within the local network 100. Also, the relay server 13 converts the PDL data received from the external system 120 into the PDL data compatible with the image forming apparatus 102.

Note that in step S1602 of FIG. 16, the conversion unit 1501 of the relay server 13 may convert the protocol of the facsimile transmission request received from the external system 120 into web API format provided by the image forming apparatus 102. As a result, the external system 120 is able to use facsimile transmission services provided by the image forming apparatuses 102 of a plurality of manufacturers with different web API formats.

As described above, according to the second embodiment, the external system 120 is able to use services provided by various information processing apparatuses in the local network 100.

In FIGs. 15A and 15B, the communication device 14 may include the conversion unit 1501 that the relay server 13 includes. In this case, the conversion unit 1501 of the communication device 14 performs data conversion or protocol conversion on the data received from the relay server 13, and transmits the data to the information processing apparatus (image forming apparatus 102, server 101, etc.) in the local network 100. Also, the conversion unit 1501 of the communication device 14 performs data conversion or protocol conversion on the data received from the information processing apparatus in the local network 100 and transmits the data to the relay server 13.

As described above, according to each embodiment of the present disclosure, the external system 120 connected to the external network is able to use the service provided by the information processing apparatus (the image forming apparatus 102, the server 101, or the like) in the local network 100.

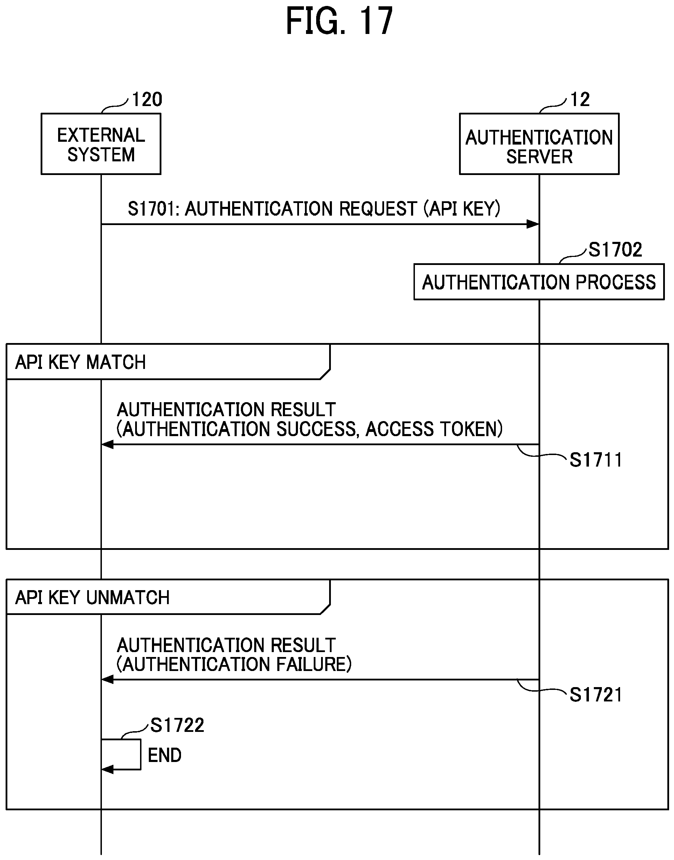

Note that each of the above embodiments is an example, and various modifications or applications are possible. For example, in step S1101 of FIG. 11, the external system 120 performs the public key authentication using the authentication server 12, but the external system 120 may perform the API key authentication as illustrated in FIG. 17.

FIG. 17 is a first sequence diagram illustrating an example of an authentication process according to an embodiment of the present disclosure. The process is another example of the authentication process performed between the external system 120 and the authentication server 12 in step S1101 of FIG. 11, for example.

At the start of the process illustrated in FIG. 17, "API key" in the authentication method setting field 602 of the authentication setting screen 600 as illustrated in FIG. 6 is assumed to be set and the API key issuance button 604 is assumed to be selected to issue the API key. Further, the user sets "API key" in the authentication method setting field 1002 of the remote facsimile service setting screen 1000 as illustrated in FIG. 10 and sets the issued API key in the API key setting field 1004.

In step S1701, the authentication control unit 804 of the external system 120 transmits an authentication request to the authentication server 12. The authentication request includes, for example, the API key set in the API key setting field 1004 of the remote facsimile service setting screen 1000. Note that the API key is an encrypted character string that identifies the application.

In step S1702, the authentication unit 412 of the authentication server 12 executes an authentication process by comparing the API key included in the authentication request with the API key issued on the authentication setting screen 600.

Based on a determination that the API keys match, the communication system 1 executes the process of step S1711. In step S1711, the authentication unit 412 of the authentication server 12 transmits to the external system 120 an authentication result indicating that the authentication is successful. The authentication result includes, for example, an access token, which is an example of authentication information for using the communication system 1. The external system 120 uses the access token to execute the process of steps S1103 and S1104 in FIG. 11.

Based on a determination that the API keys do not match, the communication system 1 executes the process of steps S1721 and S1722. In step S1721, the authentication unit 412 of the authentication server 12 transmits to the external system 120 an authentication result indicating that the authentication failed. In step S1722, the external system 120 terminates the process of FIG. 11.

The communication system 1 authenticates the external system 120 using the API key by the above process with less effort compared to the public key authentication.

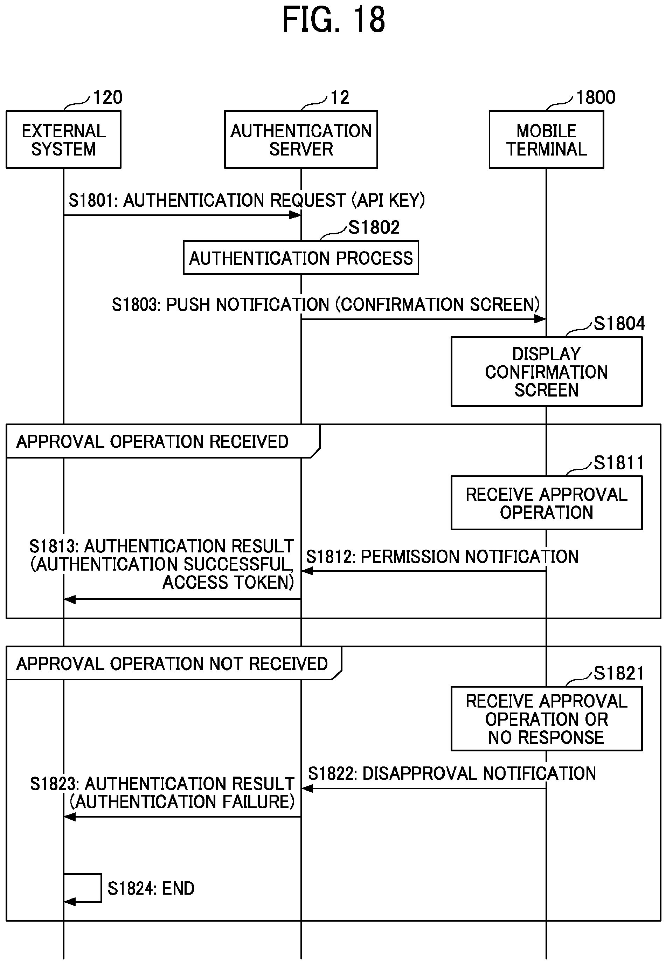

FIG. 18 is a second sequence diagram illustrating the example of the authentication process according to an embodiment of the present disclosure. The process is another example of the authentication process performed between the external system 120 and the authentication server 12 in step S1101 of FIG. 11, for example.

At the start of the process illustrated in FIG. 18, "API key" in the authentication method setting field 602 of the authentication setting screen 600 as illustrated in FIG. 6 is assumed to be set and the API key issuance button 604 is assumed to be selected to issue the API key. Also, the user selects "mobile push notification" in the multi-factor authentication setting field 605 on the authentication setting screen 600.

Further, the user sets "API key" in the authentication method setting field 1002 of the remote facsimile service setting screen 1000 as illustrated in FIG. 10 and sets the issued API key in the API key setting field 1004. Note that detailed description of the same processing as the processing described with reference to FIG. 17 is omitted here.

In step S1801, the authentication control unit 804 of the external system 120 transmits an authentication request to the authentication server 12. The authentication request includes the API key.

In step S1802, the authentication unit 412 of the authentication server 12 executes an authentication process for matching the API key included in the authentication request. Based on the determination that the API keys match, the communication system 1 executes the process from step S1803. Based on the determination that the API keys do not match, the communication system 1 executes the process of steps S1721 and S1722 in FIG. 17.

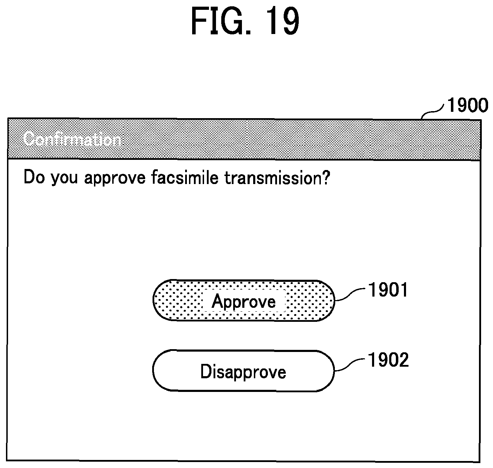

In step S1803, the authentication unit 412 of the authentication server 12 transmits by a push notification, a multi-factor authentication confirmation screen to the mobile terminal 1800 registered in advance. Accordingly, in step S1804, the mobile terminal 1800 displays a confirmation screen 1900 as illustrated in FIG. 19, for example. Note that the mobile terminal 1800 is, for example, an information terminal having a computer configuration such as a smart phone or a tablet terminal.

FIG. 19 is a diagram illustrating an example of the confirmation screen according to one embodiment. The user performs an approval operation by selecting an "Approve" button 1901 on the confirmation screen 1900. Alternatively, the user may perform a disapproval operation (or a refusal operation) by selecting a "Disapprove" button 1902 on the confirmation screen 1900.

In response to receiving the approval operation on the confirmation screen 1900, the communication system 1 executes the process of steps S1811 to S1813. For example, in steps S1811 and S1812, the mobile terminal 1800 transmits a permission notification to the authentication server 12 in response to receiving the approval operation.

In step S1813, the authentication unit 412 of the authentication server 12 transmits to the external system 120 an authentication result indicating that the authentication is successful. The authentication result includes, for example, an access token, which is an example of authentication information for using the communication system 1.

In response to receiving the disapproval operation on the confirmation screen 1900 or no response is received, the communication system 1 executes the process of steps S1821 to S1824. For example, in steps S1821 and S1822, the mobile terminal 1800 receives the disapproval operation or sends a disapproval notification to the authentication server 12 when no response is received within a time period set in advance.

In step S1823, the authentication unit 412 of the authentication server 12 transmits to the external system 120 an authentication result indicating that the authentication failed. In step S1824, the external system 120 terminates the process of FIG. 18.

The communication system 1 is able to reduce unauthorized access, for example, even when authentication information such as the API key is leaked by the above-described process.

The apparatuses or devices described in one or more embodiments are just one example of plural computing environments that implement the one or more embodiments disclosed herein. In some embodiments, the management server 11, the authentication server 12, the relay server 13, the external system 120, and the like includes multiple computing devices such as a server cluster. The plurality of computing devices is configured to communicate with one another through any type of communication link, including a network, shared memory, etc., and perform the processes disclosed herein.

Moreover, each functional configuration of the management server 11, the authentication server 12, or the relay server 13 may be integrated into one server, or may be divided into a plurality of devices. Furthermore, at least part of the functional configuration of the management server 11 may be included in the relay server 13. Also, the functions of the relay server 13 may be included in the management server 11.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A communication system (1) comprising:
a setting management unit (402) for receiving setting of access control rule corresponding to a combination of an external system (111,120) connected to an external network (2, 110) and a service provided by an information processing apparatus (101, 102) residing on a local network (100);
a communication management unit (403) for receiving from the external system(111,120), a service use request for using the service; and
a relay unit (702) for connecting to a relay server (13) on the external network (2,110) from within the local network and for relaying communication between the relay server (13) and the service according to an instruction from the communication management unit (403); wherein
the communication management unit (403) instructs the relay unit (702) to connect to the relay server (13) to relay communication between the relay server (13) and the service based on the service use request and the access control rule, and further instructs the external system (111,120) to connect to the relay server (13).

2. The communication system (1) of claim 1, wherein
the external system (111, 120) includes a connection unit (806) for connecting to the relay server (13) and for communicating with the service through the relay server (13) and the relay unit (702).

3. The communication system (1) of claims 1 or 2, wherein
the communication management unit (403) notifies the relay unit (702) and the external system (111,120) of the same identification information; and
the relay server (13) relays communication between the external system (111, 120) and the relay unit (702) having the same identification information.

4. The communication system (1) of any one of claims 1 to 3, further comprising:
a conversion unit (1501) for converting data received from the external system (111, 120) into data in a predetermined format.

5. The communication system (1) of any one of claims 1 to 4, wherein
the external system (111,120) stores in a memory authentication information for using the service; and
the communication management unit (403) verifies validity of the service use request using an authentication server (12) for authenticating the authentication information.

6. The communication system (1) of claim 5, wherein
the authentication server (12) authenticates the external system (111, 120) with public key authentication.

7. The communication system (1) of claim 5, wherein
the authentication server (12) authenticates the external system (111, 120) with API key authentication.

8. The communication system (1) of claim 5, wherein
the authentication server (12) authenticates the external system (111, 120) with multi-factor authentication.

9. The communication system (1) of any one of claims 1 to 8, comprising:
a management server (11) connected to the external network (2, 110) including the setting management unit (402) and the communication management unit (403); and
a communication device (14) connected to the local network (100) including the relay unit (702).

10. A communication method comprising:
receiving (S1104) from an external system (111, 120) a service use request for using a service;
connecting (S1106) to a relay server (13) on an external network (2, 110) from within a local network (100) for relaying communication between a relay server (13) and the service; and
instructing (S1111) the external system (111, 120) to connect to the relay server (13) for relaying communication between the relay server (13) and the service based on the service use request and the access control rule set in advance, the access control rule being corresponding to a combination of the external system (111, 120) connected to the external network (2, 110) and a service provided by an information processing apparatus (101, 102) residing on the local network (100).

11. A carrier means carrying computer readable code for controlling a computer system to carry out the method of claim 10.
